# EUROPÄISCHE PATENTSCHRIFT

(11) **EP 1 523 890 B1**
(45) Veröffentlichungstag und Bekanntmachung des Hinweises auf die Patenterteilung: **03.05.2006**
(21) Anmeldenummer: 04023927.9
(22) Anmeldetag: 07.10.2004
(51) Int. Cl.: A23B 4/09, A23B 4/005

(54) **Verfahren zur Behandlung von Frischfleisch**
Method for treating fresh meat
Procédé pour traiter de la viande fraîche

(30) Priorität: 15.10.2003 DE 10348042
(43) Veröffentlichungstag der Anmeldung: 20.04.2005
(73) Patentinhaber: SAUERSTOFFWERK FRIEDRICH GUTTROFF GMBH, D-97877 Wertheim (DE)
(72) Erfinder: Tallafus, Ottmar, 74722 Buchen (DE)
(74) Vertreter: Dimmerling, Heinz

(56) Entgegenhaltungen:
- WO-A-01/03519
- WO-A-95/10944
- PATENT ABSTRACTS OF JAPAN Bd. 1998, Nr. 10, 31. August 1998 (1998-08-31) & JP 10 136882 A (ITO AKINORI; MATSUYAMA HIDEO), 26. Mai 1998 (1998-05-26)
- DATABASE FSTA [Online] INTERNATIONAL FOOD INFORMATION SERVICE (IFIS), FRANkFURT-MAIN, DE; 2002, HONIKEL K O ET AL: "Very fast chilling and conventional chilling in comparison with regard to quality aspects." XP002313945 Database accession no. 2002-00-s0984 & FLEISCHWIRTSCHAFT, Bd. 82, Nr. 3, 2002, Seiten 116-121,
- PATENT ABSTRACTS OF JAPAN Bd. 1996, Nr. 10, 31. Oktober 1996 (1996-10-31) & JP 08 149947 A (ISEDAI SHOTEN:KK), 11. Juni 1996 (1996-06-11)

## Beschreibung

Die Erfindung betrifft ein Verfahren nach dem Oberbegriff des Anspruchs 1, zur Behandlung von Frischfleisch, insbesondere zum Reifen von frischem Fleisch, bei welchem das Frischfleisch ausgehend von einer Kemtemperatur des Frischfleischs von etwa null bis sieben Grad Celsius einer Temperaturbehandlung unterzogen wird.

Ein derartiges Verfahren ist beispielsweise aus der EP 0 675 682 B1 bekannt, wobei bei dem bekannten Verfahren das Frischfleisch unter anderem zur Erhöhung der Zartheit des Frischfleischs im Verlauf des Reifevorgangs in einem luftdicht abgeschlossenen Raum in einer Sauerstoffatmosphäre auf einen Überdruck gegenüber dem Atmosphärendruck von 6 bis 30 bar gebracht wird und dieser Überdruck während einer vorgebbaren Zeit (Reifezeit) gehalten wird. Insbesondere soll das Frischfleisch mit einer Temperatur im Bereich von 1 Grad Celsius bis 3 Grad Celsius in den Raum eingebracht werden, wobei vorzugsweise ein den Raum enthaltendes Behältnis während der Reifezeit in einem Kühlraum mit einer Temperatur im Bereich von minus 3 Grad Celsius bis 3 Grad Celsius angeordnet wird.

Nachteilig bei dem bekannten Verfahren ist, daß die Reifezeit recht hoch ist. So soll als Reifezeit bei Schweinefleisch zwei bis fünf Tage und bei Rindfleisch 5 bis 9 Tage gewählt werden.

Aus "Fleischwirtschaft 3/99; Seiten 41 und 42: Prof. Dr. Klaus Troeger: Optimierte Strategie - moderne Kühlverfahren für Schweineschlachttierkörper" ist bekannt, eine Kältekontraktur der Muskulatur (cold shortening) dadurch auszuschließen, daß beim Abkühlen von schlachtwarmem Fleisch eine nicht zu hohe Abkühtgeschwindigkeit gewählt wird. Hierzu sind unterschiedliche Kühlverfahren angegeben.

Des weiteren ist aus "Fleischwirtschaft 3/99; Seiten 43 und 44: Fredi Sehwägele: "Viele Fragen sind noch offen - Chemische und physikalischen Grundlagen" bekannt, eine Kälteverkürzung von schlachtfrischem Fleisch durch Elektrostimmulierung auszuschließen. Des weiteren ist dem genannten Aufsatz zu entnehmen, daß die Reifung von Fleisch ein muskelzellintemer Vorgang ist, der sofort nach dem Schlachten einsetzt, vor allem aber in der Folgezeit während des Kühlens bei Temperaturen zwischen minus 1 und plus 7 Grad Celsius stattfindet. Unter diesen Bedingungen dauert die Fieischreifung bei Geflügel circa 36 Stunden, bei Schwein über 60 Stunden, bei Kalb 7 Tage und bei Rind mindestens 14 Tage. Im Verlaufe des Reifeprozesses, bei dem die Muskulatur zu Fleisch umgewandelt wird, werden zwei Phasen unterschieden, bei der die zweite Phase eine Kühllagerung ist. Durch das Reifen des Fleischs während der Kühllagerung wird eine allmählich fortschreitende Verbesserung in der Fleischzartheit erreicht.

Aus der WO 01/03519 A1 ist ein Verfahren zur Behandlung von Fleisch bekannt, bei dem das Fleisch intervallartig in einem Behälter mit atmosphärischer Luft bis etwa wenigstens 10 bar ansteigendem und anschließend nach einem vorgegebenen, an das Behandlungsgut angepassten Zeitabschnitt abgesenkten Druck behandelt wird. Die Intervalldruckbeaufschlagung kann über einen Zeitabschnitt von wenigen Sekunden, vorzugsweise von drei Minuten bis zwanzig Stunden vorgenommen werden. Eine Gesamtbehandlungszeit von Fleisch von beispielsweise nur fünf Minuten soll ein akzeptables Ergebnis liefern. Beim Druckanstieg kommt es zu einer Erwärmung. Angaben über die Behandlung von Fleisch gemäß einem bestimmten Temperaturprofil enthält die Druckschrift nicht.

Dem Patent Abstracts of Japan, Band 1998, Nr. 10, 31. August 1998 (1998-08-31) & JP 1013682 A (ITO AKINORI; MATSUYAMA HIDEO), 26. Mai 1998 (1998-05-26) lässt sich ein Frische- und Reifungsprozess von Fleisch durch Frosten, Entfrosten des Fleischs entnehmen. Angaben über die Behandlung des Fleischs gemäß einem bestimmten Temperaturprofil enthält die Druckschrift jedoch nicht.

Des Weiteren lässt sich der Database FSTA [Online] INTERNATIONAL FOOD INFORMATION SERVICE (IFIS), Frankfurt-Main, DE; 2002, HONIKEL K O ET AL: "Very fast chilling and conventional chilling in comparison with regard to quality aspects." XP002313945 Database accession no. 2002-00-s0984 entnehmen, dass der Reifungsprozess von Fleisch durch rasches Kühlen der Fleischstücke auf 0 Grad Celsius (fünf Stunden post mortem), bei dem nur die äußere Schicht von zwei bis drei Millimeter eingefroren wird, abhängt. Angaben über die Behandlung von Fleisch gemäß einem vorbestimmten Temperaturprofil enthält die Druckschrift jedoch nicht.

Es ist Aufgabe der Erfindung, ein eingangs genanntes Verfahren derart auszubilden, daß sich die Reifezeit verkürzt.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Verfahren zur Behandlung von Frischfleisch, insbesondere zum Reifen von frischem Fleisch, bei welchem das Frischfleisch ausgehend von einer Kemtemperatur des Frischfleischs von etwa null bis sieben Grad Celsius einer Temperaturbehandlung unterworfen wird, dadurch gekennzeichnet, daß das Frischfleisch zunächst in einer ersten Anwärmphase bei einer Umgebungstemperatur von 30 bis to 60 Grad Celsius für 1 bis 5 Stunden, insbesondere 2 bis 4 Stunden, vorzugsweise etwa 3 Stunden erwärmt wird, anschließend in einer Frostphase bei einer Umgebungstemperatur von minus 70 bis minus 100 Grad Celsius für 2 bis 8 Stunden, insbesondere 4 bis 6 Stunden, vorzugsweise etwa 5 Stunden gekühlt wird.

Dadurch, daß das Frischfleisch zunächst in einer ersten Anwärmphase etwa ein bis fünf Stunden erwärmt wird, anschließend in einer Frostphase für zwei bis acht Stunden gekühlt wird, wird in sehr kurzer Zeit eine Reifung des Frischfleischs erreicht. So reift das gereifte Frischfleisch in einer Zeit von weniger als dreizehn Stunden soweit, wie es nach herkömmlichem Verfahren eine Vielzahl von Tagen gedauert hätte. Des weiteren ist die Zartheit des gereiften Fleischs sehr groß.

Es hat sich herausgestellt, daß dadurch, daß das Frischfleisch, bevor es in der Frostphase gekühlt wird, in der ersten Anwärmphase erwärmt wird, die Reifung des Fleischs erheblich beschleunigt werden kann. So hat man am Ende der Frostphase bereits Frischfleisch sehr großer Zartheit.

Die Zartheit des Frischfleischs kann jedoch noch dadurch wesentlich erhöht wenden, daß das Frischfleisch nach der Frostphase in einer zweiten Anwärmphase für ein bis sieben Stunden, insbesondere eineinhalb bis fünf Stunden, vorzugsweise etwa zweieinhalb Stunden wieder erwärmt wird. Durch die zweite Anwärmphase wird einerseits die Zartheit des gereiften Fleisches weiter erhöht, so daß die Zartheit des gereiften Frischfleischs nach der zweiten Anwärmphase äußerst groß ist, und andererseits das gereifte Frischfleisch in einen Zustand gebracht, in dem es sehr gut schneidbar ist.

Als sehr vorteilhaft hat sich herausgestellt, das Frischfleisch während der ersten Anwännphase, der Frostphase und gegebenenfalls der zweiten Anwärmphase in einer Sauerstoffatmosphäre zu halten, wobei es sehr vorteilhaft ist, wenn die Sauerstoffatmosphäre während der ersten und gegebenenfalls zweiten Anwärmphase aus mehr als sechzig Prozent, insbesondere mehr als siebzig Prozent, vorzugsweise etwa achtzig Prozent Sauerstoff und während der Frostphase aus mehr als siebzig Prozent, insbesondere mehr als achtzig Prozent, vorzugsweise etwa 90 Prozent Sauerstoff besteht. Dies wirkt sich ebenfalls sehr vorteilhaft auf den Reifeprozeß des Frischfleischs aus.

Als sehr vorteilhaft hat es sich auch herausgestellt, wenn die Umgebungstemperatur des Frischfleischs während der ersten und gegebenenfalls während der zweiten Anwärmphase dreißig bis sechzig Grad Celsius, insbesondere vierzig bis fünfzig Grad Celsius, vorzugsweise etwa fünfundvierzig Grad Celsius beträgt, und während der Frostphase minus siebzig bis minus hundert Grad Celsius, insbesondere minus achtzig bis minus neunzig Grad Celsius, vorzugsweise etwa minus fünfundachtzig Grad Celsius beträgt. Durch die derart gewählten Umgebungstemperaturen wird erreicht, daß die äußere Schicht des Frischfleisches durch die Temperatureinwirkung im wesentlichen nicht beeinträchtigt wird. Andererseits wird erreicht, daß das Frischfleisch, insbesondere der Fleischkern eine sehr schnelle Temperaturveränderung erfährt.

Sehr vorteilhaft ist eine Ausführungsform, bei der die erste Anwärmphase solange andauert, bis die Kemtemperatur des Frischfleischs, weiche etwa in der geometrischen Mitte eines Frischfleischstückes vorhanden beziehungsweise dort gemessen wird, sechzehn bis zwanzig Grad Celsius, insbesondere siebzehn bis neunzehn Grad Celsius, vorzugsweise etwa achtzehn Grad Celsius beträgt. Eine weitere Verbesserung des Ergebnisses wird erreicht, wenn die sich dann anschließende Frostphase in vorteilhafter Weise solange andauert, bis die Kemtemperatur des Frischfleischs minus zwei bis minus vier Grad Celsius, insbesondere minus zweieinhalb bis minus dreieinhalb Grad Celsius, vorzugsweise etwa minus drei Grad Celsius beträgt. Darüber hinaus wird das Ergebnis verbessert, wenn die sich daran gegebenenfalls anschließende zweite Anwärmphase in vorteilhafter Weise solange andauert, bis die Kemtemperatur des Frischfleischs minus ein bis minus drei Grad Celsius, insbesondere minus eineinhalb bis minus zweieinhalb Grad Celsius, vorzugsweise etwa minus zwei Grad Celsius beträgt. Bei einer derartigen Dauer der ersten Anwärmphase, insbesondere bei einer derartigen zeitlichen Abfolge der Temperatureinwirkungen werden hervorragende Ergebnisse erhalten.

Sehr vorteilhaft ist es darüber hinaus auch, daß die Umgebungstemperatur des Frischfleischs während der ersten Anwärmphase derart gewählt ist, daß die Randtemperatur des Frischfleischs, welche etwa zwei Zentimeter unter der Oberfläche eines Frischfleischstückes vorhanden ist beziehungsweise dort gemessen wird, am Ende der ersten Anwärmphase etwa plus zwanzig Grad Celsius beträgt.

Des weiteren hat sich eine Ausführungsform der Erfindung als besonders vorteilhaft herausgestellt, bei der die Umgebungstemperatur des Frischfleischs während der Frostphase derart gewählt ist, daß die Randtemperatur des Frischfleischs am Ende der Frostphase etwa minus fünfundzwanzig Grad Celsius beträgt.

Darüber hinaus hat sich eine Ausführungsform der Erfindung als besonders vorteilhaft herausgestellt, bei der die Umgebungstemperatur des Frischfleischs während der zweiten Anwärmphase derart gewählt ist, daß die Randtemperatur des Frischfleischs am Ende der zweiten Anwärmphase etwa minus zweieinhalb Grad Celsius beträgt.

Durch derart gewählte Umgebungstemperaturen wird jeweils eine Temperatureinwirkung auf das Frischfleisch erreicht, bei der der Verlauf der Kemtemperatur des Frischfleischs und der Verlauf der Randtemperatur des Frischfleischs optimal aufeinander abgestimmt sind. Dies wirkt sich ebenfalls erheblich auf die Zartheit des gereiften Frischfleischs aus, ohne daß dabei die Gesamtkeimzahl des Fleisches zu hoch ansteigt.

Sehr vorteilhaft ist auch eine Ausführungsform der Erfindung, bei der das Frischfleisch nach der zweiten Anwärmphase bei einer Umgebungstemperatur von etwa minus zweieinhalb Grad Celsius zur weiteren Verarbeitung gelagert wird.

Als äußerst vorteilhaft hat es sich herausgestellt, die Umgebungstemperatur des Frischfleischs während der ersten und gegebenenfalls während der zweiten Anwärmphase durch Zugabe von gasförmigem Sauerstoff und während der Frostphase durch Zugabe von flüssigem Sauerstoff einzustellen. Hierdurch wird einerseits die gewünschte Sauerstoffumgebung hergestellt, und andererseits in optimaler Weise ein sehr schneller Temperaturwechsel der Umgebungstemperatur erreicht. Zur Erreichung der Temperaturen für die erste und gegebenenfalls für die zweite Wärmephase kann die Umgebung des Frischfleischs durch gesonderte Heizelemente wie beispielsweise elektrische Heizstäbe erwärmt werden.

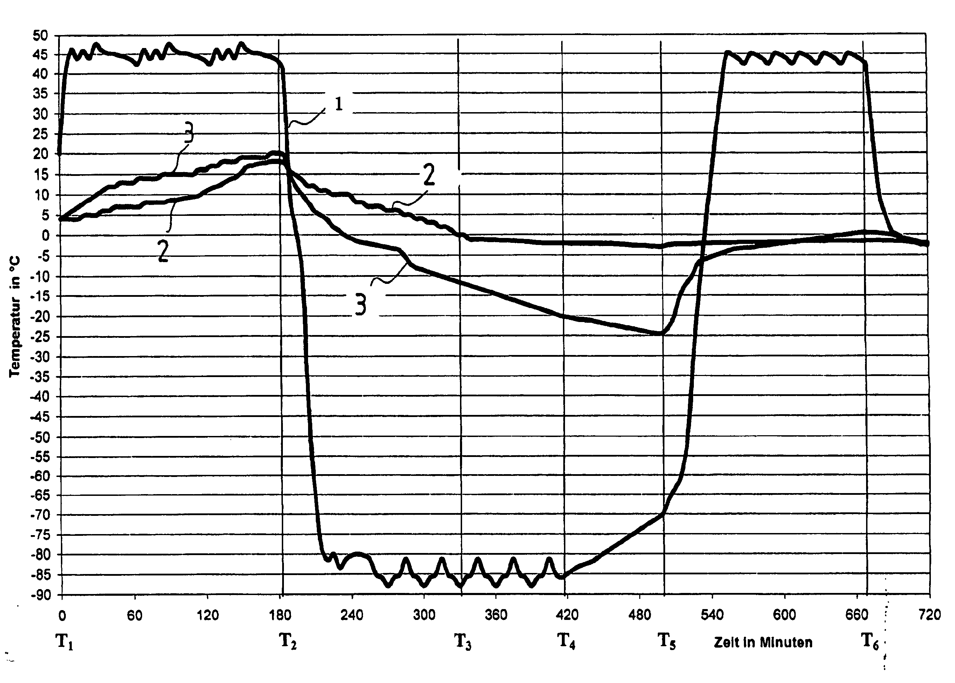

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Figur einen typischen zeitlichen Verlauf der Umgebungstemperatur, der Kemtemperatur und der Randtemperatur während der Anwendung des erfindungsgemäßen Verfahrens.

Zur Durchführung des erfindungsgemäßen Verfahrens werden große Stücke von frischem Rindfleisch, welche in der Regel mit einer Temperatur zwischen drei und fünf Grad Celsius in Transportkästen zur Verfügung stehen, in einen Raum gebracht, welcher luftdicht verschließbar ist und mit gasförmigem oder flüssigem Sauerstoff befüllt werden kann. Der Raum ist des weiteren mittels elektrischer Heizelemente beheizbar.

Nachdem die Fleischstücke, welche in der Regel ein Gewicht von zwanzig Kibgramm haben, was Abmessungen der Fleischstücke bis etwa fünfzig mal vierzig mal zwanzig Zentimeter entspricht, in den Raum gebracht wurden, wird dieser verschlossen und mit gasförmigem Sauerstoff befüllt. Des weiteren werden die elektrischen Heizelemente eingeschaltet. Hierdurch steigt die Temperatur in dem Raum, das heißt die Umgebungstemperatur 1 der Fleischstücke, welche zuvor etwa zwanzig Grad Celsius betragen hat, an.

Wie der Figur entnommen werden kann, ist die Umgebungstemperatur 1 der Fleischstücke nach etwa fünf Minuten auf fünfundvierzig Grad Celsius gestiegen. Zu Beginn (T1) der ersten Anwärmphase, welche mit dem Einschalten der Heizelemente beginnt, betragen die Kemtemperatur 2 sowie die Randtemperatur 3 der Fleischstücke etwa viereinhalb Grad Celsius. Die Kemtemperatur 2, welche naturgemäß langsamer ansteigt als die Randtemperatur 3, erreicht nach etwa hundertachtzig Minuten den Wert von achtzehn Grad Celsius. Zu diesem Zeitpunkt beträgt die Randtemperatur 3 etwa zwanzig Grad Celsius. Der Temperaturunterschied von etwa zwei Grad Celsius zu diesem Zeitpunkt ergibt sich durch die gewählte Umgebungstemperatur von fünfundvierzig Grad Celsius.

Wenn die Kemtemperatur 2 achtzehn Grad Celsius beträgt (T2), werden die elektrischen Heizelemente abgeschaltet und der Raum darüber hinaus mit flüssigem Sauerstoff befüllt. Hierdurch sinkt die Umgebungstemperatur innerhalb von etwa dreißig Minuten auf etwa minus fünfundachtzig Grad Celsius. Dies hat zur Folge, daß sich die Kemtemperatur 2 sowie die Randtemperatur 3 der Fleischstücke verringern. Durch eine entsprechende weitere gezielte Zufuhr von flüssigem Sauerstoff wird die Umgebungstemperatur 1 der Fleischstücke auf minus fünfundachtzig Grad Celsius gehalten. Etwa hundertfünfzig Minuten (T3) nach Beginn der Frostphase, welche mit dem Abschalter der Heizelemente und dem Einleiten von flüssigem Sauerstoff beginnt, beträgt die Kemtemperatur 2 etwa null Grad Celsius. Bedingt durch die Aggregat-Zustandsänderung verringert sich die Kemtemperatur 2 nach Erreichen der NullGrad-Grenze erheblich langsamer. Sie erreicht etwa dreihundertdreißig Minuten (T5) nach Beginn der Frostphase den Wert von minus drei Grad Celsius. Bei Erreichen dieses Wertes wird die Frostphase beendet und es beginnt die zweite Anwärmphase.

Die Randtemperatur 3 verringert sich naturgemäß schneller als die Kemtemperatur 2. Somit erreicht die Randtemperatur 3 bereits etwa zweihundertvierzig Minuten (T4) nach Beginn der Frostphase einen Wert von minus zwanzig Grad Celsius. Zu diesem Zeitpunkt beträgt die Kemtemperatur 2 etwa minus zweieinhalb Grad Celsius. Der Temperaturunterschied von etwa siebzehneinhalb Grad Celsius ergibt sich aufgrund der gewählten Umgebungstemperatur von minus fünfundachtzig Grad Celsius.

Bei Erreichen der Randtemperatur 3 von minus zwanzig Grad Celsius wird die Kühlung des Raums mittels flüssigem Sauerstoff eingestellt, wodurch sich die Umgebungstemperatur 1 der Fleischstücke langsam erwärmt. Die Umgebungstemperatur 1 beträgt jedoch zum Zeitpunkt, zu dem die Kemtemperatur 2 den Wert minus drei Grad Celsius erreicht, also dem Ende der Frostphase, noch etwa minus siebzig Grad Celsius. Hierdurch hat sich die Randtemperatur 3 noch auf einen Wert von etwa minus fünfundzwanzig Grad Celsius weiter verringert.

Bereits zu diesem Zeitpunkt ist die Reifung des Frischfleischs soweit fortgeschritten, daß es eine Zartheit hat, welche es bei einer herkömmlichen Reifung erst nach einigen Tagen erreicht hätte. Allerdings läßt die Schneidbarkeit am Ende der Frostphase noch zu wünschen übrig. Die Behebung dieses Nachteils sowie eine weitere Verbesserung der Zartheit läßt sich durch die Weiterbehandlung des Frischfleischs mittels einer zweiten Anwärmphase erreichen.

Nach dem Ende der Frostphase werden somit die elektrischen Heizelemente wieder in Betrieb genommen, wodurch die zweite Anwärmphase beginnt. Durch den Betrieb der elektrischen Heizelemente erreicht die Umgebungstemperatur 1 der Fleischstükke etwa fünfundvierzig Minuten nach Beginn der zweiten Anwärmphase einen Wert von etwa fünfundvierzig Grad Celsius. Hierdurch steigen die Kemtemperatur 2 und die Randtemperatur 3 wieder an. Etwa hundertachtzig Minuten (T6) nach Beginn der zweiten Anwärmphase werden die elektrischen Heizelemente wieder abgeschaltet und emeut flüssiger Sauerstoff (LO₂) zur rascheren Abkühlung in die Reifekammer eingesprüht, wodurch die Umgebungstemperatur 1 absinkt auf einen Wert von etwa minus zweieinhalb Grad Celsius.

## Patentansprüche

1. Verfahren zur Behandlung von Frischfleisch, insbesondere zum Reifen von frischem Fleisch, bei welchem das Frischfleisch ausgehend von einer Kemtemperatur des Frischfleischs von etwa 0 bis 7 Grad Celsius einer Temperaturbehandlung unterworfen wird,
**dadurch gekennzeichnet,**
**daß** das Frischfleisch zunächst in einer ersten Anwärmphase bei einer Umgebungstemperatur von 30 bis 60 Grad Celsius für 1 bis 5 Stunden, insbesondere 2 bis 4 Stunden, vorzugsweise etwa 3 Stunden erwärmt wird, und anschließend in einer Frostphase bei einer Umgebungstemperatur von minus 30 bis minus 100 Grad Celsius für 2 bis 8 Stunden, insbesondere 4 bis 6 Stunden, vorzugsweise etwa 5 Stunden gekühlt wird.

2. Verfahren nach Anspruch 1,
**dadurch gekennzeichnet,**
**daß** das Frischfleisch nach der Frostphase in einer zweiten Anwärmphase für 1 bis 7 Stunden, insbesondere 1,5 bis 5 Stunden, vorzugsweise etwa 2,5 Stunden wieder erwärmt wird.

3. Verfahren nach Anspruch 1 oder 2,
**dadurch gekennzeichnet,**
**daß** das Frischfleisch während der ersten Anwärmphase, der Frostphase und gegebenenfalls während der zweiten Anwärmphase in einer Sauerstoffatmosphäre gehalten wird.

4. Verfahren nach Anspruch 3,
**dadurch gekennzeichnet,**
**daß** die Sauerstoffatmosphäre während der ersten und gegebenenfalls während der zweiten Anwärmphase aus mehr als 60 Prozent, insbesondere mehr als 70 Prozent, vorzugsweise etwa 80 Prozent Sauerstoff und während der Frostphase aus mehr als 70 Prozent, insbesondere mehr als 80 Prozent, vorzugsweise etwa 90 Prozent Sauerstoff besteht.

5. Verfahren nach einem der Ansprüche 1 bis 4,
**dadurch gekennzeichnet,**
**daß** die Umgebungstemperatur des Frischfleischs während der ersten und gegebenenfalls während der zweiten Anwärmphase 40 bis 50 Grad Celsius, vorzugsweise etwa 45 Grad Celsius beträgt, und während der Frostphase minus 80 bis minus 90 Grad Celsius, vorzugsweise etwa minus 85 Grad Celsius beträgt

6. Verfahren nach einem der Ansprüche 1 bis 5,
**dadurch gekennzeichnet,**
**daß** die erste Anwärmphase solange andauert, bis die-Kemtemperatur des Frischfleischs 16 bis 20 Grad Celsius, insbesondere 17 bis 19 Grad Celsius, vorzugsweise etwa 18 Grad Celsius beträgt.

7. Verfahren nach einem der Ansprüche 1 bis 6
**dadurch gekennzeichnet,**
**daß** die Frostphase solange andauert, bis die Kemtemperatur des Frischfleischs minus 2 bis minus 4 Grad Celsius, insbesondere minus 2,5 bis minus 3,5 Grad Celsius, vorzugsweise etwa minus 3 Grad Celsius beträgt.

8. Verfahren nach einem der Ansprüche 2 bis 7,
**dadurch gekennzeichnet,**
**daß** die zweite Anwärmphase solange andauert, bis die Kemtemperatur des Frischfleischs minus 1 bis minus 3 Grad Celsius, insbesondere minus 1,5 bis minus 2,5 Grad Celsius, vorzugsweise etwa minus 2 Grad Celsius beträgt.

9. Verfahren nach einem der Ansprüche 6 bis 8,
**dadurch gekennzeichnet,**
**daß** die Umgebungstemperatur des Frischfleischs während der ersten Anwärmphase derart gewählt ist, daß die Randtemperatur des Frischfleischs am Ende der ersten Anwärmphase etwa plus 20 Grad Celsius beträgt.

10. Verfahren nach einem der Ansprüche 6 bis 9,
**dadurch gekennzeichnet,**
**daß** die Umgebungstemperatur des Frischfleischs während der Frostphase derart gewählt ist, daß die Randtemperatur des Frischfleischs am Ende der Frostphase etwa minus 25 Grad Celsius beträgt.

11. Verfahren nach einem der Ansprüche 2 bis 10,
**dadurch gekennzeichnet,**
**daß** die Umgebungstemperatur des Frischfleischs während der zweiten Anwärmphase derart gewählt ist, daß die Randtemperatur des Frischfleischs am Ende der zweiten Anwärmphase etwa minus 2,5 Grad Celsius beträgt.

12. Verfahren nach einem der Ansprüche 2 bis 11,
**dadurch gekennzeichnet,**
**daß** das Frischfleisch nach der zweiten Anwärmphase bei einer Umgebungstemperatur von etwa minus 2,5 Grad Celsius bis zur weiteren Verarbeitung gelagert wird.

13. Verfahren nach einem der Ansprüche 1 bis 12,
**dadurch gekennzeichnet,**
**daß** die Umgebungstemperatur des Frischfleischs während der ersten und gegebenenfalls während der zweiten Anwärmphase durch Zugabe von gasförmigem Sauer stoff und während der Frostphase durch Zugabe von flüssigem Sauerstoff eingestellt wird.

## Claims

1. Method for treating raw meat, in particular for maturing fresh meat, wherein the raw meat is initially subjected to temperature treatment, starting from a core temperature of the fresh meat in the range of approximately 0°C to 7°C, **characterised in that** the raw meat is warmed in a first warming phase at an ambient temperature in the range of 30°C to 60°C for 1 to 5 hours, and in particular for 2 to 4 hours, and preferably approximately 3 hours, and is subsequently cooled in a freezing phase at an ambient temperature in the range of -70°C to -100°C for 2 to 8 hours, and in particular for 4 to 6 hours, and preferably approximately 5 hours.

2. Method according to claim 1, **characterised in that** the raw meat is warmed again following the freezing phase in a second warming phase for 1 to 7 hours, and in particular 1.5 to 5 hours, and preferably approximately 2.5 hours.

3. Method according to claim 1 or 2, **characterised in that** the raw meat is kept in an oxygen atmosphere during the first warming phase, the freezing phase and possibly during the second warming phase.

4. Method according to claim 3, **characterised in that**, during the first and possibly during the second warming phase, the oxygen atmosphere comprises more than 60%, and in particular more than 70%, and preferably approximately 80% oxygen, and during the freezing phase, more than 70%, and in particular more than 80%, and preferably approximately 90% oxygen.

5. Method according to one of the claims 1 to 4, **characterised in that** the ambient temperature of the raw meat during the first and possibly during the second warming phase is in the range of 40°C to 50°C, and preferably approximately 45°C, and during the freezing phase, in the range of -80°C to -90°C, and preferably approximately -85°C.

6. Method according to one of the claims 1 to 5, **characterised in that** the first warming phase lasts until the core temperature of the raw meat is in the range of 16°C to 20°C, and in particular in the range of 17°C to 19°C, and preferably approximately 18°C.

7. Method according to one of the claims 1 to 6, **characterised in that** the freezing phase lasts until the core temperature of the raw meat is in the range of -2°C to -4°C, and in particular -2.5°C to -3.5°C, and preferably approximately -3°C.

8. Method according to one of the claims 2 to 7, **characterised in that** the second warming phase lasts until the core temperature of the raw meat is in the range of - 1°C to -3°C, and in particular in the range of -1.5°C to - 2.5°C, and preferably approximately -2°C.

9. Method according to one of the claims 6 to 8, **characterised in that** the ambient temperature of the raw meat during the first warming phase is chosen such that the surface temperature of the raw meat at the end of the first warming phase is approximately 20°C.

10. Method according to one of the claims 6 to 9, **characterised in that** the ambient temperature of the raw meat during the freezing phase is chosen such that the surface temperature of the raw meat at the end of the freezing phase is approximately -25°C.

11. Method according to one of the claims 2 to 10, **characterised in that** the ambient temperature of the raw meat during the second warming phase is chosen such that the surface temperature of the raw meat at the end of the second warming phase is approximately -2.5°C.

12. Method according to one of the claims 2 to 11, **characterised in that**, after the second warming phase, the raw meat is stored at an ambient temperature of approximately -2.5°C until it is further processed.

13. Method according to one of the claims 1 to 12, **characterised in that** the ambient temperature of the raw meat during the first and possibly during the second warming phase is adjusted by addition of gaseous oxygen and, during the freezing phase, by addition of liquid oxygen.

## Revendications

1. Procédé de traitement de la viande fraîche, en particulier pour la maturation de la viande fraîche, dans lequel la viande fraîche, partant d'une température à coeur de la viande fraîche d'environ zéro à sept degrés Celsius, est soumise à un traitement par la chaleur, **caractérisé en ce que** la viande fraîche est d'abord chauffée au cours d'une première phase de réchauffement à une température ambiante de 30 à 60 degrés Celsius pendant 1 à 5 heures, en particulier 2 à 4 heures, et de préférence pendant environ 3 heures, puis **en ce qu'**elle est refroidie au cours d'une phase de réfrigération à une température ambiante de -70 à -100 degrés Celsius pendant 2 à 8 heures, en particulier 4 à 6 heures et de préférence pendant environ 5 heures.

2. Procédé selon la revendication 1, **caractérisé en ce que** la viande fraîche, après la phase de réfrigération, est de nouveau réchauffée au cours d'une seconde phase de réchauffement pendant 1 à 7 heures, en particulier pendant 1h30 à 5 heures, et de préférence pendant environ 2h30.

3. Procédé selon la revendication 1 ou 2, **caractérisé en ce que** la viande fraîche est maintenue sous atmosphère d'oxygène pendant la première phase de réchauffement, la phase de réfrigération et éventuellement la seconde phase de réchauffement.

4. Procédé selon la revendication 3, **caractérisé en ce que** l'atmosphère d'oxygène au cours de la première et éventuellement de la seconde phase de réchauffement se compose à plus de soixante pour cent, en particulier à plus de soixante-dix pour cent et de préférence à près de quatre-vingt pour cent d'oxygène, et au cours de la phase de réfrigération à plus de soixante-dix pour cent, en particulier à plus de quatre-vingts pour cent et de préférence à près de quatre-vingt dix pour cent d'oxygène.

5. Procédé selon l'une des revendications 1 à 4, **caractérisé en ce que** la température ambiante de la viande fraîche au cours de la première et éventuellement au cours de la seconde phase de réchauffement est comprise entre 40 et 50 degrés Celsius, de préférence est de l'ordre de 45 degrés Celsius et **en ce qu'**elle est comprise au cours de la phase de réfrigération entre -80 et -90 degrés Celsius, et de préférence est de l'ordre de -85 degrés Celsius.

6. Procédé selon l'une des revendications 1 à 5, **caractérisé en ce que** la première phase de réchauffement dure jusqu'à ce que la température à coeur de la viande fraîche atteigne 16 à 20 degrés Celsius, en particulier 17 à 19 degrés Celsius, et de préférence jusqu'à ce qu'elle soit d'environ 18 degrés Celsius.

7. Procédé selon l'une des revendications 1 à 6, **caractérisé en ce que** la phase de réfrigération dure jusqu'à ce que la température à coeur de la viande fraîche atteigne -2 à -4 degrés Celsius, en particulier -2,5 à -3,5 degrés Celsius, et de préférence jusqu'à ce qu'elle soit d'environ - 3 degrés Celsius

8. Procédé selon l'une des revendications 2 à 7, **caractérisé en ce que** la seconde phase de réchauffement dure jusqu'à ce que la température à coeur de la viande fraîche atteigne -1 à -3 degrés Celsius, en particulier -1,5 à -2,5 degrés Celsius, et de préférence jusqu'à ce qu'elle soit d'environ -2 degrés Celsius.

9. Procédé selon l'une des revendications 6 à 8, **caractérisé en ce que** la température ambiante de la viande fraîche au cours de la première phase de réchauffement est choisie de telle sorte que la température de surface de la viande fraîche au terme de la première phase de réchauffement soit de quelque +20 degrés Celsius.

10. Procédé selon l'une des revendications 6 à 9, **caractérisé en ce que** la température ambiante de la viande fraîche au cours de la phase de réfrigération est choisie de telle sorte que la température de surface de la viande fraîche au terme de la phase de réfrigération soit de quelque -25 degrés Celsius.

11. Procédé selon l'une des revendications 2 à 10, **caractérisé en ce que** la température ambiante de la viande fraîche au cours de la seconde phase de réchauffement est choisie de telle sorte que la température de surface de la viande fraîche au terme de la seconde phase de réchauffement soit de quelque -2,5 degrés Celsius.

12. Procédé selon l'une des revendications 2 à 11, **caractérisé en ce que** la viande fraîche après la seconde phase de réchauffement est stockée à une température ambiante d'environ -2,5 degrés Celsius jusqu'à traitement ultérieur.

13. Procédé selon l'une des revendications 1 à 12, **caractérisé en ce que** la température ambiante de la viande fraîche au cours de la première phase de réchauffement et éventuellement au cours de la seconde phase de réchauffement est ajustée par adjonction d'oxygène gazeux et au cours de la phase de réfrigération par adjonction d'oxygène liquide.
